Europäisches Patentamt

European Patent Office

Office européen des brevets

(19)

(11) Numéro de publication: **0 034 084**
**B1**

(12) **FASCICULE DE BREVET EUROPEEN**

(45) Date de publication du fascicule du brevet: **13.04.83**

(51) Int. Cl.³: **F 16 C 33/66, F 16 N 7/36**

(21) Numéro de dépôt: **81400128.5**

(22) Date de dépôt: **29.01.81**

(54) **Palier à rouleaux comportant un dispositif de graissage de la piste de roulement interne.**

(30) Priorité: **12.02.80 FR 8003007**

(43) Date de publication de la demande:
**19.08.81 Bulletin 81/33**

(45) Mention de la délivrance du brevet:
**13.04.83 Bulletin 83/15**

(84) Etats contractants désignés:
**DE FR GB**

(56) Documents cités:
**EP - A - 0 009 834**
**DE - A - 2 351 197**
**FR - A - 1 025 571**
**FR - A - 1 130 655**
**FR - A - 1 179 305**
**FR - A - 2 039 247**
**FR - A - 2 142 472**
**GB - A - 907 143**
**US - A - 2 998 287**

(73) Titulaire: **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur: **Olivier, Jean-Marie Robert**
**56, rue Montagne du Perray**
**F-91100 St Pierre Du Perray (FR)**

(74) Mandataire: **Moinat, François et al,**
**S.N.E.C.M.A. Service des Brevets Boîte Postale 81**
**F-91003 Evry Cedex (FR)**

Courier Press, Leamington Spa, England.

Palier à rouleaux comportant un dispositif de graissage de la piste de roulement interne

La présente invention concerne un palier à rouleaux comportant un dispositif de graissage de la piste de roulement interne.

Il s'applique plus particulièrement dans le cas où, pour des raisons, technologiques, il est impossible ou très difficile de lubrifier directement la piste de roulement interne du palier.

Comme on le sait, les paliers à rouleaux, du genre de ceux qui sont utilisés dans les turbines à gaz de moteurs d'avions pour supporter un premier arbre par rapport à un second arbre comportent une bague interne montée sur le premier arbre, une bague externe montée dans un alésage du second arbre et des rouleaux situés entre les bagues interne et externe régulièrement espacés par une cage.

La solution généralement utilisée pour le graissage de tels paliers consiste à amener directement le lubrifiant sur la piste interne au moyen de gicleurs ou par l'alésage d'un arbre intérieur. Sous l'effet de la force centrifuge, le lubrifiant est entraîné vers la piste extérieure du palier, de sorte que celui-ci se trouve convenablement lubrifié.

A titre d'illustration de cette solution, on peut citer le palier à roulements décrit dans le brevet américain 3 722 967 déposé le 26 octobre 1971 au nom de Harry R. Lewis. Ce brevet décrit un palier qui comporte un dispositif de graissage de la piste interne. De l'huile, provenant d'un réservoir de stockage est projetée à la base des rouleaux sur la piste de roulement interne. Sous l'effet de la force centrifuge, cette huile passe à travers la cage qui maintient les rouleaux régulièrement espacés et se dépose sur la piste de roulement externe du palier. Cette huile est ensuite récupérée dans des rainures circulaires pratiquées sur la bague externe, puis est recyclée vers le réservoir de stockage.

Cependant, il n'est pas toujours possible d'acheminer le lubrifiant sur la piste interne du palier, en particulier dans certains turboréacteurs modernes où un palier interarbres à rouleaux assure le centrage du corps haute pression HP sur le corps basse pression BP. On doit donc amener le lubrifiant sur la piste externe, qui est, dans ces conditions, convenablement lubrifiée. En revanche, la piste interne est mal lubrifiée et l'évacuation des calories n'y est pas assurée, d'autant plus que la force centrifuge s'oppose au cheminement de l'huile de la piste externe vers la piste interne.

L'invention a précisément pour objet un palier à rouleaux qui comporte un dispositif de graissage de la piste de roulement interne et qui remédie par conséquent à ces inconvénients.

Ce palier à rouleaux, supportant en rotation un premier arbre par rapport à un second arbre, et comprenant une bague interne montée sur le premier arbre, une bague externe montée dans un alésage du second arbre, et des rouleaux régulièrement espacés situés entre les bagues interne et externe, chaque bague comportant une piste de roulement pour les rouleaux, un lubrifiant amené de manière connue sur la piste de roulement externe formant un film d'huile sur celle-ci se caractérise en ce que la pression résultant du passage des rouleaux sur la piste roulement externe, force ledit lubrifiant à pénétrer dans des trous A, régulièrement répartis percés dan la bague externe qui conduisent le lubrifiant vers des moyens pour l'acheminer sur la piste interne du palier, la bague externe comportant de plus des trous B, régulièrement répartis, percés dans la bague externe pour conduire le lubrifiant, sous l'effet de ladite pression résultant du passage des rouleaux, de ladite piste externe vers l'alésage dudit second arbre d'où il est renvoyé au circuit général de lubrifiant par des pompes de récupération des enceintes de palier.

Selon un premier mode de réalisation, les moyens pour acheminer le lubrifiant sur ladite piste interne sont constitués par deux flasques espacés axialement solidaires de la bague externe, délimitant un espace annulaire dans lequel le fluide de lubrification pénètre par les trous A, et comportant des orifices situés à proximité immédiate de la piste interne pour diriger le fluide de lubrification sur celle-ci, des moyens contre le retour dudit fluide étant en outre prévus dans ledit espace annulaire.

Selon ce mode de réalisation, les moyens pour empêcher le retour du lubrifiant sont constitués par un clapet antiretour à membrane.

Dans une variante, les deux flasques comportent des orifices situés sous l'extrémité de la bague interne pour diriger le fluide de lubrification vers des rainures longitudinales ménagées sous ladite bague en communication avec des perçages radiaux qui débouchent sur la piste interne.

Selon un second mode de réalisation, les moyens pour acheminer le lubrifiant sur ladite piste interne sont constitués par des gicleurs individuels montés sur la bague externe et régulièrement répartis, chaque gicleur comportant un orifice acheminant le fluide de lubrification sur la piste interne, les moyens pour empêcher le retour du lubrifiant étant constitués par des clapets anti-retour à billes et à ressorts.

Selon un troisième mode de réalisation, les moyens pour empêcher le retour du lubrifiant sont constitués par des diaphragmes ayant un coefficient de pertes de charge différent, selon que l'écoulement y passe dans un sens ou dans le sens contraire.

De toute façon, les caractéristiques et avantages de la présente invention apparaîtront mieux après la description qui suit, d'exemples de réalisation donnés à titre explicatif et nullement limitatif, en référence aux dessins annexés sur lesquels:

—la figure 1 représente une vue en coupe d'un palier selon l'invention, avec un premier mode de réalisation des moyens pour empêcher le recyclage du lubrifiant,

—la figure 2 représente une vue de détail du palier représenté sur la figure 1,

—la figure 3 représente une vue en coupe selon I—I du palier représenté sur la figure 1,

—la figure 4 représente une vue de détail du deuxième mode de réalisation des moyens pour empêcher le recyclage du lubrifiant,

— la figure 5 représente en perspective partielle une vue de détail d'un troisième mode de réalisation de ces moyens,

—la figure 6 représente une vue de détail du premier mode de réalisation, montrant une variante des moyens de distribution du lubrifiant sur la piste interne.

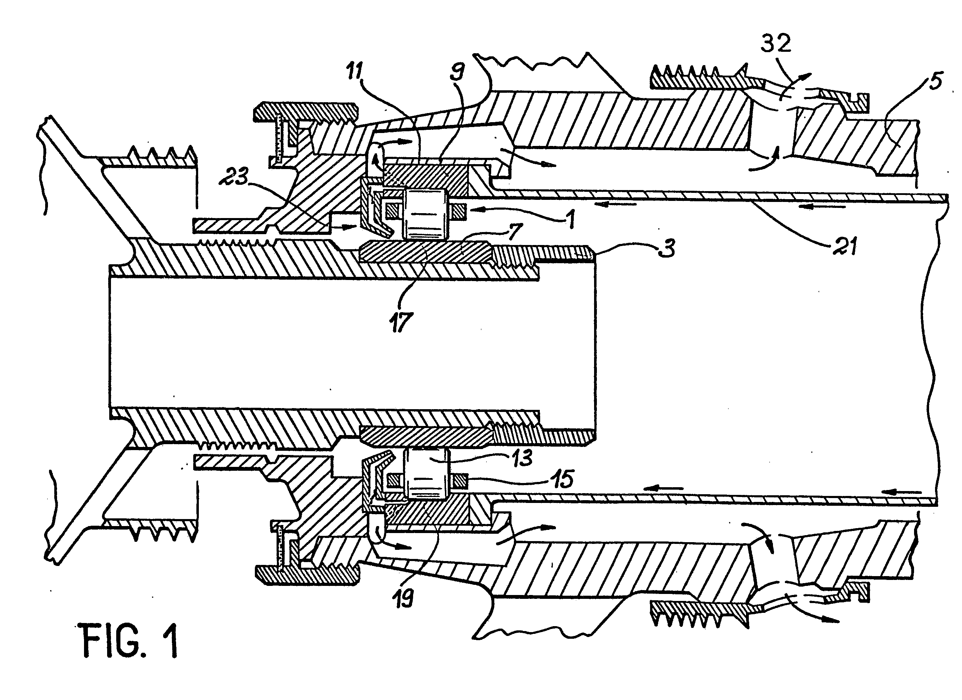

Sur la figure 1, on a représenté une vue en coupe d'un palier selon le premier mode de réalisation de l'invention, désigné par la référence générale 1, disposé entre un premier arbre 3 et un second arbre 5. Le palier 1 comprend une bague interne 7 montée sur le premier arbre 3, une bague externe 9 montée dans un alésage 11 du second arbre 5. Des rouleaux 13 maintenus à espaces réguliers par la cage 15 sont situés entre la bague interne 7 et la bague externe 9. Au cours de la rotation de l'arbre 3 par rapport à l'arbre 5, les rouleaux 13 roulent sur les pistes de roulement interne et externe, désignées respectivement par les références 17 et 19, du palier.

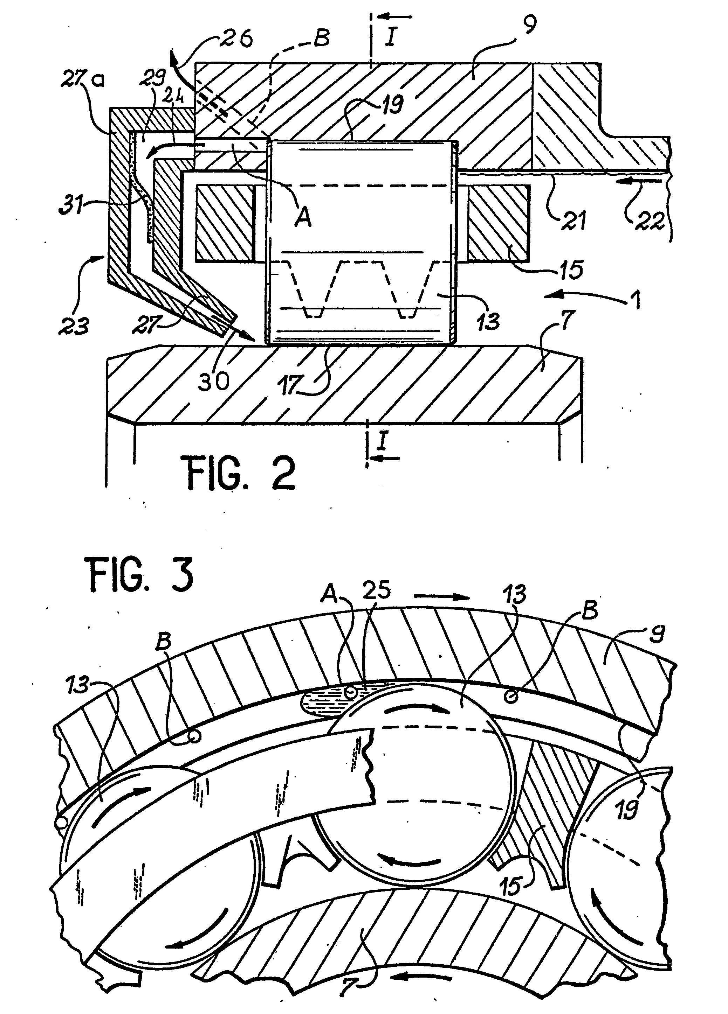

C'est dans les cas où le palier 1 est monté dans un ensemble dont l'architecture présente une complexité telle qu'elle ne permet pas de lubrifier directement la piste de roulement interne 17 que l'invention est particulièrement avantageuse. Dans ce cas, c'est sur la piste de roulement externe 19 que l'on amène le lubrifiant 21 au moyen d'un gicleur (non représenté). Cette situation se présente en particulier dans le cas de certains turboréacteurs modernes où un palier interarbres à rouleaux assure le centrage du corps haute pression sur le corps basse pression. Le palier de l'invention comporte un dispositif 23 de graissage de la piste de roulement interne 17. Ce dispositif est représenté en détail sur la figure 2.

Sur la figure 2, on a représenté une vue de détail du palier 1 représenté sur la figure 1, ainsi que du dispositif 23 de graissage de la piste de roulement interne 17. Le dispositif 23 comporte des trous A percés axialement dans la bague externe 9 et régulièrement répartis sur la périphérie de celle-ci. Dans ce mode de réalisation, le nombre $n$ de trous A est égal au nombre N de rouleaux du palier. Selon une variante de réalisation de ce mode, le nombre $n$ de trous A peut être égal à N/2 ou à un autre sous-multiple de N. Mais en aucun cas $n$ ne peut être supérieur à N. En effet, comme on le verra par la suite, s'il y avait plus de trous A que de rouleaux, le circuit de graissage sous pression pourrait se recycler sur lui-même et la piste de roulement interne 17 serait mal alimentée en lubrifiant 21, constitué par de l'huile dans l'exemple décrit.

Conformément à l'invention, le palier 1 comporte encore des moyens pour acheminer le lubrifiant 21 sur la piste de roulement interne 17.

Dans l'exemple de réalisation représenté, ces moyens sont constitués par deux flasques 27 et 27a espacés axialement, solidaires de la bague externe 9 et délimitant entre eux un espace annulaire 29 dans lequel le lubrifiant pénètre par les trous A. Entre les deux flasques 27, 27a, on trouve des moyens pour empêcher le retour en arrière du lubrifiant 21. Ces moyens, désignés par la référence 31, sur la figure 2, sont constitués par un clapet anti-retour à membrane.

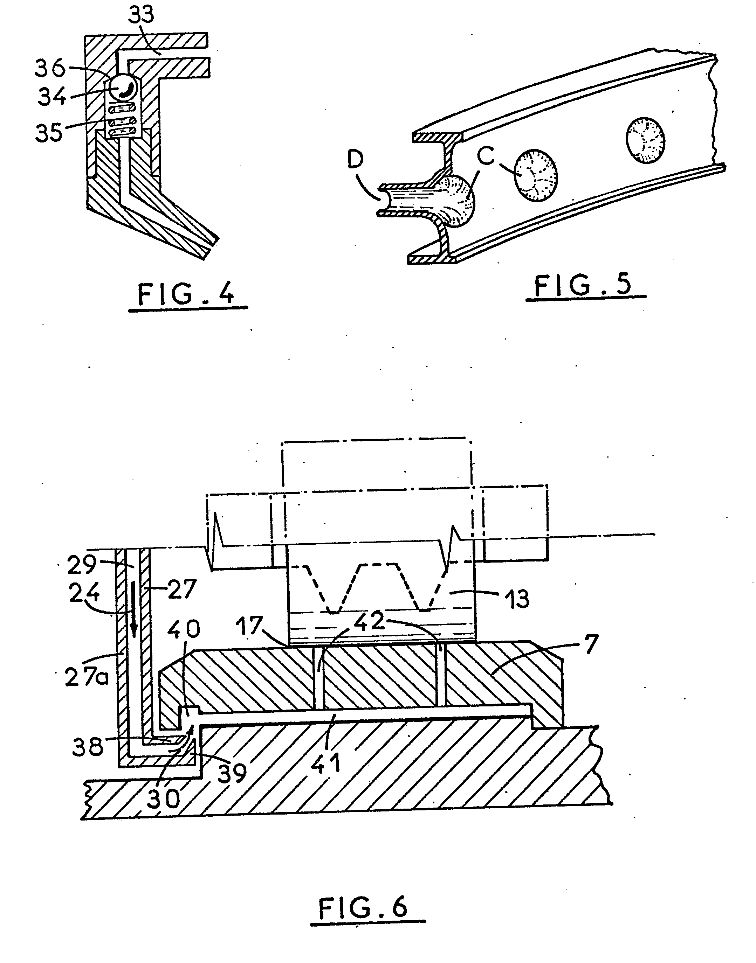

Selon un second mode de réalisation des moyens pour empêcher le retour du lubrifiant, représenté sur la figure 4, chaque trou A débouche dans un trou correspondant 33 d'un dispositif de gicleur individuel à anti-retour, constitué par une bille 34, appuyé sur un siège en forme de cône 36, par exemple par un ressort 35. Dans ce cas, le nombre $n$ de trous A peut être différent du nombre N de rouleaux, ou d'un sousmultiple de N, du fait que le système individuel d'antiretour empêche le recyclage de l'huile, contrairement à ce qui se passe dans le premier mode de réalisation.

Selon un troisième mode de réalisation des moyens pour empêcher le recyclage du lubrifiant, représenté sur la figure 5, des diaphragmes sont ménagés par exemple dans une couronne placée dans l'espace 29. Leurs entrées C sont en regard des trous A et ont un profil adouci. Leurs sorties D, au contraire, ont un profil anguleux. De ce fait, les turbulences qu'elles engendrent en cas de reflux ont tendance à freiner l'écoulement de D vers C, lorsque les entrées A ne sont pas en regard des coins d'huile 25 (figure 3), alors que l'écoulement de C vers D, lorsque les entrées A sont en regard des coins d'huile 25, est beaucoup moins freiné. Dans ce mode de réalisation, le nombre $n$ de trous A est égal au nombre N de rouleaux ou à un sous-multiple de N.

Comme pour le premier mode de réalisation, cette condition est nécessaire pour éviter le recyclage: il faut en effet que tous les trous A se trouvent en même temps en regard des coins d'huile 25. Si certains trous A se trouvaient en regard des intervalles entre les coins d'huile, du fait de l'intercommunication par la chambre 29 entre les trous A mis en pression par le coin d'huile et les autres trous A qui ne seraient pas mis en pression, le lubrifiant serait recyclé sur la piste externe 19 au lieu être envoyé sous pression contre la force centrifuge sur la piste interne par le dispositif 23. Dans une variante non représentée les diaphragmes à sens préférentiel C, D sont individuellement reliés aux trous A (sans passer par une chambre commune 29), et la condition $n = N$ ou un sous-multiple de N n'est pas impérative.

Pour chacun des modes de réalisation décrits ci-dessus, la bague externe 9 comporte de plus une série de trous B qui sont représentés percés obliquement (voir figure 2). En fait, leur position, leur orientation et leur agencement général doivent être tels qu'ils ne communiquent pas avec le/les circuit(s) d'alimentation de la piste interne 17 en aval des trous A. Dans l'exemple de réalisation représenté (voir figure 3), le nombre $n'$ de trous B est égal à celui des trous A, chaque trou B étant situé entre deux trous A et à égale distance de ceux-ci.

Dans un autre exemple de réalisation non représenté, $n'$ pourrait être différent de $n$; par exemple il peut y avoir deux trous B dans chaque intervalle de trous A ou au contraire un trou B une fois sur deux dans les intervalles de trous A.

Bien qu'il ait été précisé précédemment que dans le deuxième mode de réalisation correspondant à la figure 4, le nombre $n$ de trous A et le nombre $n'$ de trous B sont indépendants du nombre de rouleaux, il faut remarquer qu'il peut être avantageux d'avoir, notamment pour $n$, un nombre suffisamment grand de trous pour bien répartir le lubrifiant sur la piste interne, et d'ajuster le nombre $n'$ trous B et/ou leur diamètre pour éviter l'accumulation d'huile sur la piste externe.

Le fonctionnement du palier selon l'invention est le suivant, le fonctionnement étant décrit en détail seulement dans le cas du premier mode de réalisation, le fonctionnement des autres cas s'en déduisant facilement.

Le lubrifiant 21 est amené de manière connue selon le sens de la flèche 22 par un gicleur (non représenté), vers la piste de roulement externe 19 sur laquelle il forme un film. Un coin d'huile 25 se forme à l'avant de chaque rouleau 13, entre le rouleau lui-même et la piste de roulement externe 19, comme on peut le voir sur la figure 3.

On a pu observer que la pression au sommet du coin d'huile 25 peut atteindre plusieurs centaines de bars. Sous l'effet de cette pression, le lubrifiant 21 pénètre, au moment du passage du rouleau 13, à l'intérieur des trous A. Il pénètre ensuite, suivant la flèche 24, à l'intérieur de la cavité annulaire 29, pour arriver ensuite, suivant la flèche 30, sur la piste de roulement interne 17, qui est ainsi lubrifiée.

D'une manière identique à ce qui a été décrit pour les trous A, le lubrifiant 21 est forcé à l'intérieur des trous B lorsque le coin d'huile 25 qui se forme à l'avant de chaque rouleau 13 passe devant l'ouverture d'un trou B. Le lubrifiant amené sur la piste interne 17 est recentrifugé vers la piste de roulement externe 19. Le lubrifiant ainsi centrifugé se mélange avec de l'huile arrivant selon la flèche 22. Une partie de cette huile sort par les trous B suivant la flèche 26 (voir figures 1 et 2) vers des trous percés dans le second arbre 5, à l'intérieur duquel est montée la bague externe 9. Ce lubrifiant est enfin récupéré suivant les flèches 32 d'où il est renvoyé au circuit général de lubrifiant par les pompes de récupération des enceintes de paliers.

On a représenté sur la figure 6 une vue de détail montrant une variante de réalisation du palier 1 représenté sur la figure 2. Les deux flasques 27, 27a sont prolongés en regard de la bague interne 7 est forment par leurs parties 38 et 39 un orifice situé sous une rainure circulaire 40 qui se trouve au voisinage de l'extrémité de cette bague. La bague 7 comporte également sur sa face interne des rainures longitudinales 41 qui communiquent avec cette rainure circulaire 40 et avec des perçages radiaux 42 qui débouchent sur la piste de roulement interne 17.

Le fonctionnement du palier reste identique et conforme à l'invention. Mais le lubrifiant, à partir de la cavité annulaire 29, est distribué à l'entrée des rainures 41 pour arriver ensuite par les perçages 42 sur la piste de roulement interne 17, qui est ainsi lubrifiée.

On a représenté sur la figure 3 une vue en coupe selon la ligne I—I de la figure 2, dans le cas du premier mode de réalisation des moyens pour empêcher le retour du lubrifiant. Dans cette variante, le nombre N de rouleaux 13 est égal au nombre $n$ des trous A et par suite au nombre $n'$ de trous B, puisque les trous A et B sont en nombre égal. Par suite de cette réalisation, tous les coins d'huile 25 formés à l'avant des rouleaux 13 passent simultanément devant les trous A. Ils passent ensuite simultanément devant les trous B.

Selon une variante de réalisation, on peut prévoir un nombre $n$ de trous A et corrélativement de trous B égal à la moitié du nombre N de rouleaux. Avec cette configuration, lorsqu'un coin d'huile 25 passe devant un trou A, le coin d'huile formé devant les rouleaux immédiatement précédents et suivants se trouve en regard d'un trou B. Le lubrifiant 21 est ainsi simultanément dirigé vers la piste de roulement interne 17 et vers le retour d'huile.

Il faut rappeler que dans ce mode de réalisation, le nombre $n$ ne peut pas être supérieur à N, mais est égal à un sous multiple de $n$ étant entendu que le cas où $n = N$ entre dans ce cas.

Le retour d'huile par les trous B présente un double avantage. Tout d'abord, il évite que le lubrifiant 21 ne se recycle perpétuellement sur lui-même et ne se dégrade rapidement. D'autre part, cette décharge automatique de la pression exercée sur les rouleaux 13 par les coins d'huile 25 améliore la longévité de la piste de roulement interne 17, car cette dernière est soumise à une charge moins importante, charge que l'on peut d'ailleurs doser en jouant sur le diamètre des trous B ou leur nombre.

On voit donc que le palier réalisé conformément à l'invention permet d'assurer le débit de graissage de la piste de roulement interne 17 en réalisant un graissage actif de celle-ci, d'obtenir une meilleure évacuation des calories et une plus grande homogénéité des températures de la bague interne 7 et de la bague externe 9.

Bien entendu, la présente invention n'est pas limitée aux modes de réalisation et d'utilisation décrits ci-dessus. Notamment, les trous A ont été représentés parallèles à l'axe de rotation des arbres, mais pourraient être percés avec une obliquité tangentielle et/ou radiale, de même que les trous B. De même, les clapets anti-retour du second mode de réalisation sont représentés avec des ressorts appuyant les billes sur des cônes pour former anti-retour. Dans certaines réalisations, le ressort peut être supprimé, la force centrifuge suffisant à appuyer les billes sur les cônes correspondants.

**Revendications**

1. Palier à rouleaux supportant en rotation un premier arbre (3) par rapport à un second arbre (5), et comprenant une bague interne (7) montée sur le premier arbre (3), une bague externe (9) montée dans un alésage (11) du second arbre (5), et des rouleaux (13) régulièrement espacés situés entre les bagues interne (7) et externe (9), chaque bague comportant une piste de roulement pour les rouleaux (13), un lubrifiant (21) amené de manière connue sur la piste de roulement externe (19), formant un film d'huile sur celle-ci, caractérisé en ce que la pression résultant du passage des rouleaux (13) sur la piste de roulement externe (19) force ledit lubrifiant (21) à pénétrer dans des trous A, régulièrement répartis et percés dans le bague externe, qui conduisent le lubrifiant (21) vers des moyens pour l'acheminer sur la piste interne (17) du palier, la bague externe (9) comportant de plus des trous B, régulièrement répartis, percés dans la bague externe (9) pour conduire le lubrifiant (21), sous l'effet de ladite pression résultant du passage des rouleaux (13), de ladite piste externe (19) vers l'alésage (11) dudit second arbre (5), pour y être recyclé.

2. Palier à rouleaux selon la revendication 1, caractérisé en ce que les moyens pour acheminer le lubrifiant sur la piste de roulement interne (17) sont constitués par deux flasques (27), (27a) espacés axialement, solidaires de la bague externe (9) et délimitant un espace annulaire (29) dans lequel le fluide de lubrification (21) pénètre par les trous A et comportant des orifices situés à proximité immédiate de la piste interne (17) pour diriger le fluide de lubrification (21) sur celle-ci, des moyens contre le retour dudit fluide étant en outre prévus dans ledit espace annulaire (29).

3. Palier à rouleaux selon la revendication 1, caractérisé en ce que les moyens pour acheminer le lubrifiant sur la piste de roulement interne (17) sont constitués par deux flasques (27), (27a) espacés axialement, solidaires de la bague externe (9) et délimitant un espace annulaire (29) dans lequel le fluide du lubrification (21) pénètre par les trous A et comportent des orifices situés sous l'extrémité de la bague interne (7) pour diriger le fluide de lubrification (21) à travers des rainures longitudinales (41) pratiquées sur la face interne de la bague interne (7) et des perçages radiaux (42) qui débouchent sur la piste interne (17), des moyens contre le retour du fluide étant en outre prévus dans ledit espace annulaire (29).

4. Palier à rouleaux selon l'une des revendications 2 ou 3, caractérisé en ce que les moyens pour empêcher le retour de lubrifiant sont constitués par un clapet anti-retour à membrane (31).

5. Palier à rouleaux selon la revendication 1, caractérisé en ce que les moyens pour acheminer le lubrifiant vers la piste de roulement interne (17) sont constitués par des gicleurs individuels montés sur la bague externe et régulièrement répartis, chaque gicleur individuel comportant un orifice (33) et un dispositif anti-retour à bille (34) appuyée sur un cône (36) par un ressort (35) et acheminant le fluide de lubrification sur la piste interne (17).

6. Palier à rouleaux selon la revendication 1, caractérisé en ce que les moyens pour acheminer le lubrifiant sur ladite piste de roulement interne (17) sont constitués par une couronne portée par la bague externe (9) et comportant des diaphragmes (C—D) conformés de façon à favoriser l'écoulement dans le sens allant de la bague externe vers la bague interne.

7. Palier à rouleaux selon la revendication 4 ou 6 caractérisé en ce que le nombre $n$ des trous A est égal au nombre N de rouleaux ou à un sous-multiple de N.

8. Palier à rouleaux selon l'une des revendications précédentes, caractérisé en ce que les trous B sont indépendants du circuit d'acheminement du lubrifiant vers la piste interne (17) en aval des trous A.

9. Palier à rouleaux selon l'une des revendications 2, 3, 4 ou 5 caractérisé en ce que le nombre $n$ des trous A et le nombre $n'$ des trous B sont égaux au nombre N de rouleaux du palier, les trous B étant percés obliquement dans la bague externe et régulièrement répartis entre les trous A.

10. Turbomachine à corps multiple comportant un palier interarbres à rouleaux graissé selon l'une des revendications précédentes.

**Claims**

1. Roller bearing rotatably supporting a first shaft (3) with respect to a second shaft (5), and comprising an inner race (7) mounted on the first shaft (3), an outer race (9) mounted in a bore (11) of the second shaft (5), and regularly distributed rollers (13) located between the inner (7) and outer (9) races, each race comprising a rolling track for the rollers (13) a lubricant (21) supplied in known manner onto the outer roller track (19), forming a film of oil on the latter, characterised in this that the pressure resulting from the passage of the rollers (13) on the outer rolling track (19) forces the said lubricant (21) to penetrate into regularly distributed holes A extending in the outer race, which leads the lubricant (21) to means for directing it on to the inner track (17) of the bearing, the outer race (9) comprising, furthermore, regularly distributed holes B extending in the outer race (9) in order to lead the lubricant (21), under the action of the said pressure resulting from the passage of the rollers (13), from the said outer track (19) to the bore (11) of the said second shaft (5), in order that it can be recycled therefrom.

2. Roller bearing according to claim 1 characterised in this that the means for directing the lubricant onto the inner rolling track (17) are constituted by two axially-spaced plates (27), (27a), rigid with the outer race (9) and defining an annular space (29) into which the said lubricant fluid (21) enters through the holes A and comprising orifices disposed in the immediate proximity of the inner tack (17) in order to direct the lubricant fluid (21) on to the latter, means preventing the return of the said fluid being, moreover, provided within the said annular space (29).

3. Roller bearing according to claim 1, characterised in this that the means for directing the lubricant on to the inner rolling track (17) are constituted by two axially-spaced plates (27), (27a), rigid with the outer race (9) and defining an annular space (29) into which the said lubricant fluid (21) enters through the holes A and comprising orifices disposed at the end of the inner race (7) in order to direct the lubricant fluid (21) through longitudinal grooves (41) machined on the inner face of the inner race (7) and radial apertures (42) which discharge on to the inner track (17), means serving to prevent the return of fluid being, moreover, provided within the said annular space (29).

4. Roller bearing according to one of claims 2 or 3, characterised in this that the means for preventing the return of lubricant are constituted by a membrane non-return valve (31).

5. Roller bearing according to claim 1, characterised in this that the means for directing the lubricant towards the inner rolling track (17) are constituted by individual, regularly-distributed, nozzles mounted on the outer race and each individual nozzle comprising an orifice (33) and a non-return ball device (34) applied on a cone (36) by a spring (35) and directing the lubricant fluid on to the inner track (17).

6. Roller bearing according to claim 1, characterised in this that the means for directing the lubricant on to the said inner rolling track (17) are constituted by an annulus carried by the outer race (9) and comprising diaphragms (C—D) shaped in such a manner as to encourage flow in the direction from the outer race to the inner race.

7. Roller bearing according to claims 4 or 6 characterised in this that the number *n* of holes A is equal to the number N of the rollers or to a sub-multiple of N.

8. Roller bearing according to one of the preceding claims, characterised in this that the holes B are independent of the circuit for directing the lubricant towards the inner track (17) downstream of the holes (A).

9. Roller bearing according to one of claims 2, 3, 4 or 5 characterised in this that the number *n* of holes, A and the number *n'* of holes B are equal to the number N of rollers of the bearing, the holes B extending obliquely in the outer race and regularly distributed between the holes A.

10. A multiple unit turbo-machine comprising an intershaft bearing with lubricated rollers according to one of the preceding claims.

## Patentansprüche

1. Rollenlager zur drehbaren Lagerung einer ersten Welle (3) mit bezug auf eine zweite Welle (5), mit einem inneren Ring (7), der auf der ersten Welle (3) angeordnet ist, einem äußeren Ring (9), der in einer Bohrung (11) der zweiten Welle (5) angeordnet ist, und Rollen (13), die sich in regelmäßigen Abständen voneinander und zwischen dem inneren Ring (7) und dem äußeren Ring (9) befinden, wobei jeder Ring eine Lauffläche für die Rollen (13) aufweist, ein Schmiermittel (21) in an sich bekannter Weise der äußeren Lauffläche (19) zugeführt wird und auf dieser einen Ölfilm bildet, dadurch gekennzeichnet, daß der Druck, der durch das Laufen der Rollen (13) auf die äußere Lauffläche (19) ausgeübt wird, das Schmiermittel (21) dazu treibt, in Bohrungen (A) einzudringen, die regelmäßig verteilt sind und sich durch den äußeren Ring erstrecken und die das Schmiermittel (21) zu Mitteln leiten, um es auf die innere Lauffläche (17) des Lagers zu befördern, wobei der äußere Ring (9) außerdem Bohrungen (B) aufweist, die regelmäßig verteilt sind, und sich durch den äußeren Ring (9) erstrecken, um das Schmiermittel (21) unter der Wirkung des Druckes, der durch das Laufen der Rollen (13) erzeugt wird, von der äußeren Lauffläche (19) zur Bohrung (11) der zweiten Welle (5) zu führen, um zu dieser zurückgeführt zu werden.

2. Rollenlager nach Anspruch 1, dadurch gekennzeichnet, daß die Mittel zur Zuführung des Schmiermittels zur inneren Lauffläche (17) durch zwei Schilder (27, 27a) gebildet werden, die sich in einem axialen Abstand voneinander befinden, mit dem äußeren Ring (9) fest verbunden sind und einen ringförmigen Raum (29) begrenzen, in welchem das Schmiermittel (21) durch die Bohrungen (A) eindringt, und Öffnungen aufweist, die sich in unmittelbarer Nähe der inneren Lauffläche (17) befindet, um das Schmiermittel auf diese zu leiten, in welchem ringförmigen Raum (29) außerdem Mittel gegen den Rücklauf des Schmiermittels vorgesehen sind.

3. Rollenlager nach Anspruch 1, dadurch gekennzeichnet, daß die Mittel für die Zufuhr des Schmiermittels zur inneren Lauffläche (17) durch zwei Schilder (27, 27a) gebildet werden, die mit dem äußeren Ring (9) fest verbunden sind und einen ringförmigen Raum (29) begrenzen, in welchen das Schmiermittel (21) durch die Bohrungen (A) eindringt, und Öffnungen unter dem Ende des inneren Ringes (7), um das Schmiermittel (21) durch Längsnuten (41) zu leiten, die an der Innenfläche des inneren Ringes (7) vorgesehen sind, und durch radiale Bohrungen (42), die an der inneren Lauffläche (17) münden, wobei außerdem Mittel gegen den Rückfluß des Schmiermittels in dem erwähnten ringförmigen Raum (29) vorgesehen sind.

4. Rollenlager nach einem der Ansprüche 2 oder 3, dadurch gekennzeichnet, daß die Mittel zur Verhinderung des Schmiermittelrücklaufs durch ein Membranrückschlagventil (31) gebildet werden.

5. Rollenlager nach Anspruch 1, dadurch gekennzeichnet, daß die Mittel zum Fördern des Schmiermittels zur inneren Lauffläche (17) durch einzelne Düsen gebildet werden, die auf dem äußeren Ring angeordnet und regelmäßig verteilt sind, wobei jede einzelne Düse eine Öffnung (33) und ein Kugelrückschlagventil (34) aufweist, die gegen eine konische Fläche (36) durch eine Feder (35) belastet ist und das Schmiermittel auf die innere Lauffläche (17) leitet.

6. Rollenlager nach Anspruch 1, dadurch gekennzeichnet, daß die Mittel zur Förderung des Schmiermittels auf die innere Lauffläche (17) durch einen Kranz gebildet werden, der von dem äußeren Ring (9) getragen wird, und Membrane (C—D) aufweisen, die so gestaltet sind, daß sie das Abfließen in dem Sinn vom äußeren Ring zum inneren Ring begünstigen.

7. Rollenlager nach dem Anspruch 4 oder 6, dadurch gekennzeichnet, daß die Zahl (n) der Bohrungen (A) gleich der Zahl (N) der Rollen oder ein Untervielfaches von (N) ist.

8. Rollenlager nach einem der vorangehenden Ansprüche, dadurch gekennzeichnet, daß die Bohrungen (B) unabhängig von dem Zuführungskreislauf des Schmiermittels zur inneren Lauffläche (17) unterstromig der Bohrungen (A) sind.

9. Rollenlager nach einem der Ansprüche 2, 3, 4 oder 5, dadurch gekennzeichnet, daß die Zahl (n) der Bohrungen (A) und die Zahl (n') der Bohrungen (B) gleich der Zahl (N) der Rollen des Lagers sind, wobei die Bohrungen (B) im äußeren Ring schräg verlaufen und zwischen den Bohrungen (A) regelmäßig verteilt sind.

10 Turbomaschine mit Mehrfachkörper mit Zwischenwellen-Rollenlager, geschmiert nach einem oder mehreren der vorangehenden Ansprüche.

FIG. 1

FIG. 2

FIG. 3

FIG.4

FIG.5

FIG.6